# FASCICULE DE BREVET EUROPEEN

(11) **EP 2 469 056 B1**
(45) Date de publication et mention de la délivrance du brevet: **22.03.2017**
(21) Numéro de dépôt: 11194658.8
(22) Date de dépôt: 20.12.2011
(51) Int. Cl.: F02C 7/20, F16M 1/08

(54) **Enceinte pour équipement thermique et procédé de montage**
Schutzmantel für thermische Ausrüstung und Montageverfahren
Enclosure for thermal equipment and installation method.

(30) Priorité: 23.12.2010 FR 1061172
(43) Date de publication de la demande: 27.06.2012
(73) Titulaire: GE Energy Products France SNC, 90000 Belfort (FR)
(72) Inventeur: Dupont, Denis, 90000 BELFORT (FR)
(74) Mandataire: Delprat, Olivier

(56) Documents cités:
- FR-A1- 2 398 888
- GB-A- 2 148 398
- JP-A- 2006 105 052
- US-A- 3 791 682
- US-A- 4 007 388
- US-A1- 2004 040 313
- US-A1- 2007 079 573
- US-A1- 2007 152 126
- US-A1- 2009 229 194
- US-A1- 2010 269 419

## Description

La présente invention concerne les équipements thermiques, notamment les turbines à gaz et les modules auxiliaires d'une turbine à gaz. En particulier, la présente invention concerne une enceinte, notamment acoustique, pour équipement thermique.

Les équipements thermiques, et plus particulièrement les turbines à gaz, comprennent plusieurs modules auxiliaires nécessaires à leur fonctionnement. Ainsi, une turbine à gaz peut comprendre un module pour le gaz, permettant la régulation de la pression et de la température du combustible gazeux alimentant la turbine à gaz, un module pour l'eau, permettant l'injection d'eau dans la chambre de combustion de la turbine afin de réduire les émissions d'oxydes d'azote NOₓ, un module d'équipements auxiliaires comprenant des systèmes nécessaires notamment au démarrage de la turbine à gaz, à la lubrification, etc.

Les modules sont installés à proximité de la turbine à gaz afin de limiter la longueur des tuyaux et afin d'améliorer l'installation des composants de la turbine à gaz sur site.

Les modules comprennent généralement une enceinte afin d'assurer la protection des composants du module, de l'environnement extérieur (poussière, humidité, etc), de permettre l'atténuation acoustique du bruit généré par lesdits composants et de protéger les personnes se trouvant à proximité desdits composants en cas de disfonctionnement, par exemple en cas d'incendie ou d'explosion. Cependant, la conception de l'enceinte doit aussi permettre de faciliter le montage et d'envisager les opérations de maintenance du module, avec un accès facile aux composants.

Des enceintes pour équipement thermique sont déjà connus, notamment par les documents US 2010/0163705, US 2009/0049842, CN 2009/65136U, JP 2006/105052 et US 4 007 388.

Les enceintes pour équipement thermique sont ainsi soit montées sur le socle de l'équipement thermique (enceinte sur socle), soit montées sur une fondation séparée entourant l'équipement thermique (enceinte hors socle).

Les enceintes sur socle sont installées en périphérie du socle de l'équipement thermique. Elles présentent donc un volume relativement faible qui ne nécessite pas une quantité importante d'agent extincteur pour la protection contre les incendies. De plus, elles ne nécessitent pas de fondation supplémentaire. Cependant, les enceintes sur socle ne permettent pas une circulation aisée autour de l'équipement thermique pour les opérations de maintenance. Ainsi, de nombreuses portes doivent être ajoutées sur les façades de l'enceinte afin d'améliorer l'accès à l'équipement thermique, au détriment des performances acoustiques, et les panneaux entourant l'équipement thermique doivent aussi être démontables facilement afin de permettre les travaux de maintenance dans de bonnes conditions. De plus, le socle de l'équipement thermique n'est pas isolé phoniquement par l'enceinte, ce qui réduit les performances acoustiques de l'ensemble.

Les enceintes hors socle sont installées autour de l'équipement thermique : leur largeur est importante et dépasse généralement celle qui est autorisée pour le transport de l'équipement thermique. Elles offrent ainsi suffisamment d'espace autour de l'équipement thermique pour les opérations de maintenance, et ne nécessitent donc pas de nombreuses portes. Cependant, le volume des enceintes hors socle est important, et nécessite une quantité importante d'agent extincteur pour la protection incendie, une ventilation plus importante et un risque accru de zones de ventilation stagnantes à l'intérieur de l'enceinte. Par ailleurs, les enceintes hors socle comprennent beaucoup de pièces à assembler sur site, ce qui augmente la durée de montage, et des fondations en plus de celles de l'équipement thermique.

Le but de la présente invention est de résoudre les problèmes cités précédemment. Notamment, un but de la présente invention est de proposer une enceinte permettant d'effectuer de manière aisée des opérations de maintenance sur l'équipement thermique, tout en gardant un volume limité et un nombre de pièces réduit. Un but de la présente invention est également de proposer une méthode de montage aisée d'une telle enceinte acoustique permettant d'assurer aussi la protection au moins partiellement de l'équipement thermique durant l'acheminement sur le lieu de montage.

Selon un aspect, il est proposé conformément à la revendication 1 une enceinte, notamment acoustique, pour équipement thermique, par exemple une turbine à gaz ou un module auxiliaire d'une turbine à gaz, ledit équipement thermique étant monté sur un socle, comprenant :
- une structure métallique, notamment verticale, comprenant des faces latérales aptes à entourer au moins partiellement ledit équipement thermique, et
- une chambre comprenant une face interne, de préférence au moins partiellement ouverte.

La structure métallique est apte à être montée sur le socle dudit équipement thermique et ladite chambre est montée, par sa face interne, sur au moins une des faces latérales de la structure métallique, et ladite chambre est apte à s'étendre latéralement au-delà du socle dudit équipement thermique. Autrement dit, la chambre est montée, par sa face interne, sur au moins une des faces latérales de la structure métallique et peut s'étendre latéralement au-delà du socle dudit équipement thermique.

La chambre permet d'accueillir des personnes afin de permettre notamment les opérations de maintenance. Autrement dit, des personnes, telles que des techniciens, peuvent entrer et/ou circuler dans la chambre afin notamment d'intervenir sur l'équipement thermique et d'effectuer les opérations de maintenance.

La chambre comprend également une face externe, de préférence au moins partiellement fermée.

La chambre est définie par sa face interne, sa face externe, sa face supérieure et sa face inférieure. Les différentes faces de la chambre définissent un volume dans lequel peuvent circuler des techniciens et qui peut s'étendre au-delà du socle de l'équipement thermique protégé par l'enceinte.

Ainsi, l'enceinte permet d'aménager un espace pour les opérations de maintenance, tout en étant montée sur le socle de l'équipement thermique. Par ailleurs, l'enceinte définit un volume optimisé autour de l'équipement thermique uniquement, et pas autour de l'équipement thermique et de son socle. On diminue ainsi la quantité d'agent extincteur à prévoir, et le risque de zones stagnantes à l'intérieur de l'enceinte.

Enfin, la partie la plus volumineuse de l'enceinte est constituée par la structure métallique, qui présente des dimensions sensiblement égales aux plus grandes dimensions de l'équipement thermique (plus grande longueur, plus grande largeur et plus grande hauteur). La structure métallique peut donc être transportée avec les mêmes moyens que l'équipement thermique lui-même, ce qui facilite le transport de l'enceinte.

Selon un mode de réalisation, la structure métallique comprend des faces latérales aptes à entourer ledit équipement thermique, et la chambre est une chambre circulaire comprenant une face interne circulaire, de préférence au moins partiellement ouverte. La chambre circulaire est montée, par sa face interne, sur les faces latérales de la structure métallique. La chambre circulaire peut comprendre également une face externe circulaire, de préférence au moins partiellement fermée.

On entend par chambre circulaire, ou chambre ayant un contour fermé, un volume permettant de revenir au point de départ lorsqu'on le parcourt. La chambre circulaire est donc un volume basé sur un contour fermé, c'est-à-dire un volume entourant une partie centrale libre. La chambre circulaire n'est donc pas limitée à une forme torique, mais peut se présenter sous la forme d'un couloir rectangulaire fermé sur lui-même.

On peut alors accéder aux quatre côtés de l'équipement thermique pour y effectuer les opérations de maintenance. Cependant, lorsque l'équipement thermique est assemblé à un ou plusieurs autres équipements thermiques par au moins un de ses côtés, alors la chambre n'est de préférence pas circulaire, et est montée par sa face interne à une ou plusieurs faces latérales libres de la structure métallique.

L'enceinte peut comprendre également une paroi supérieure et la structure métallique peut comprendre une face supérieure sur laquelle est montée la paroi supérieure. La paroi supérieure peut alors être transportée avec l'équipement thermique lui-même, ce qui facilite le transport de l'enceinte.

La chambre, par exemple circulaire, peut comprendre également une face inférieure et une face supérieure au moins partiellement fermées.

La face externe de la chambre, par exemple circulaire, peut comprendre une ou plusieurs portes.

Avantageusement, l'enceinte comprend également une paroi circulaire montée sous la chambre, de préférence circulaire, et apte à entourer latéralement le socle dudit équipement thermique. La paroi circulaire permet d'isoler le socle de l'équipement thermique, de manière indépendante de l'équipement thermique lui-même. En effet, la paroi est montée sous la chambre, de préférence circulaire, et en est séparée par la face inférieure de la chambre circulaire. Ainsi, grâce à la paroi circulaire, il est possible d'atténuer les nuisances sonores provoquées par le socle, tout en conservant le même volume entourant l'équipement thermique.

Avantageusement, la structure métallique a une forme rectangulaire et la chambre circulaire comprend quatre extensions, ou parties, parallèles et de même largeur deux à deux. Il est ainsi possible de transporter et de monter de manière aisée l'enceinte, grâce aux dimensions des différents éléments qui sont inférieures ou sensiblement égales à celles de l'équipement thermique.

Selon un autre aspect, il est également proposé conformément à la revendication 8 un dispositif comprenant un équipement thermique monté sur un socle, et une enceinte telle que décrite précédemment.

Selon un autre aspect, il est également proposé conformément à la revendication 9 un procédé de montage d'une enceinte telle que décrite précédemment. Selon le procédé, on fixe la structure métallique sur le socle de l'équipement thermique, et on fixe, sur la structure métallique, des extensions pour former la chambre, par exemple circulaire, sur la structure métallique.

Avantageusement, l'enceinte comprend une structure métallique de forme rectangulaire et une chambre circulaire avec quatre extensions, ou parties, parallèles et de même largeur deux à deux et éventuellement une paroi supérieure, et, selon le procédé :
- on fixe la structure métallique sur le socle dudit équipement thermique, avec ledit équipement thermique, éventuellement on monte la paroi supérieure sur la face supérieure de la structure métallique, et on assemble, deux à deux, par leur face interne, les extensions de même largeur de la chambre circulaire, pour l'acheminement sur le lieu de montage, puis
- on sépare les quatre extensions de la chambre circulaire et on les fixe à la structure métallique.

On peut ainsi transporter et monter de manière aisée l'enceinte de l'équipement thermique. On diminue notamment les pièces à assembler sur site, c'est-à-dire le temps de montage, ainsi que le volume des différents éléments de l'enceinte. En particulier, la structure métallique de l'enceinte, qui est volumineuse, et la paroi supérieure sont transportées en même temps que l'équipement thermique, la structure métallique étant utilisée comme protection durant le transport et permettant également de fixer une bâche de protection autour de l'équipement thermique.

Avantageusement, on monte également une paroi circulaire sous la chambre, de préférence circulaire, autour du socle dudit équipement thermique.

D'autres avantages et caractéristiques de l'invention apparaîtront à l'examen de la description détaillée d'un mode de réalisation de l'invention nullement limitatif, et des dessins annexés, sur lesquels :
- la figure 1 représente, de manière schématique, un dispositif comprenant un équipement thermique et une enceinte ;
- la figure 2 illustre, de manière schématique, un équipement thermique et son socle avant le montage de l'enceinte ;
- la figure 3 illustre, de manière schématique, l'équipement thermique sur son socle, avec la structure métallique ;
- la figure 4 illustre, de manière schématique, l'équipement thermique sur son socle, avec la structure métallique, la paroi supérieure et deux extensions de la chambre circulaire ;
- la figure 5 illustre, de manière schématique, l'équipement thermique sur son socle, avec la structure métallique, la chambre circulaire et une partie de la paroi circulaire,
- la figure 6 illustre, de manière schématique, deux extensions de la chambre circulaire assemblées par leur face interne pour le transport, et
- la figure 7 illustre, de manière schématique, les deux autres extensions de la chambre circulaire assemblées par leur face interne pour le transport.

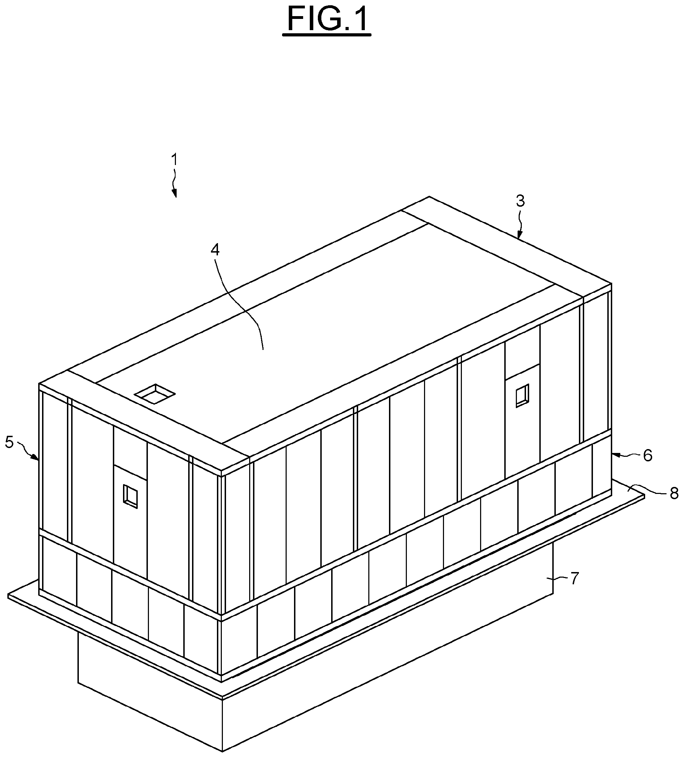

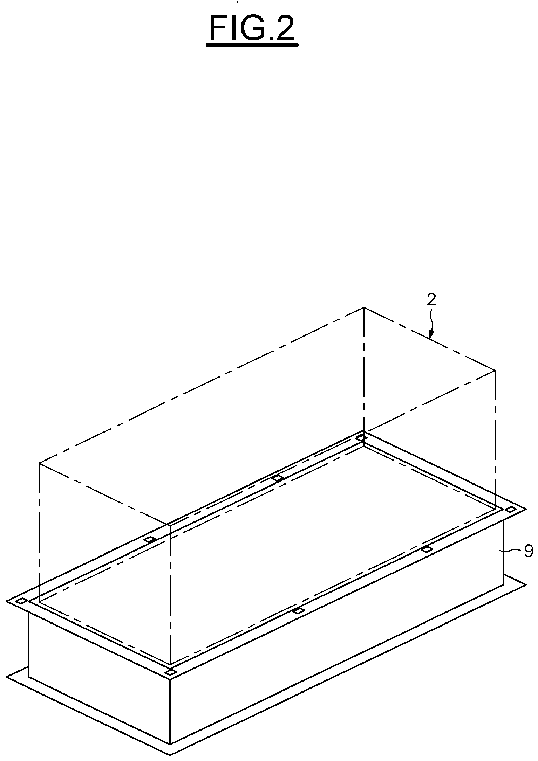

La figure 1 représente de manière schématique un dispositif 1 comprenant un équipement thermique 2 (voir figure 2) et une enceinte 3. L'enceinte 3 comprend une paroi supérieure 4, une chambre circulaire 5 et une paroi circulaire 6. La paroi supérieure 4 et la chambre circulaire 5 sont disposées au-dessus du socle 9 (voir figure 2) de l'équipement thermique et la paroi circulaire 6 est montée sur une dalle 8 coulée autour des fondations 7 de l'équipement thermique. L'enceinte 3 permet une isolation acoustique et une protection entre l'équipement thermique 2 et l'extérieur de l'enceinte. L'enceinte 3 permet également à des personnes d'accéder facilement à l'équipement thermique 2 depuis l'extérieur, afin d'y effectuer des opérations de maintenance.

La figure 2 représente, manière schématique, l'équipement thermique 2 et son socle 9. Le socle 9 permet de faciliter le transport de l'équipement thermique 2, ainsi que sa disposition sur site. En particulier, le socle 9 et l'équipement thermique 2 sont destinés à être disposés sur les fondations 7 prévues à cet effet. Dans le cadre de la présente description, l'équipement thermique peut être, par exemple, une turbine à gaz, ou bien encore un module auxiliaire de la turbine à gaz. A des fins de simplification, la figure 2 représente l'encombrement de l'équipement thermique 2.

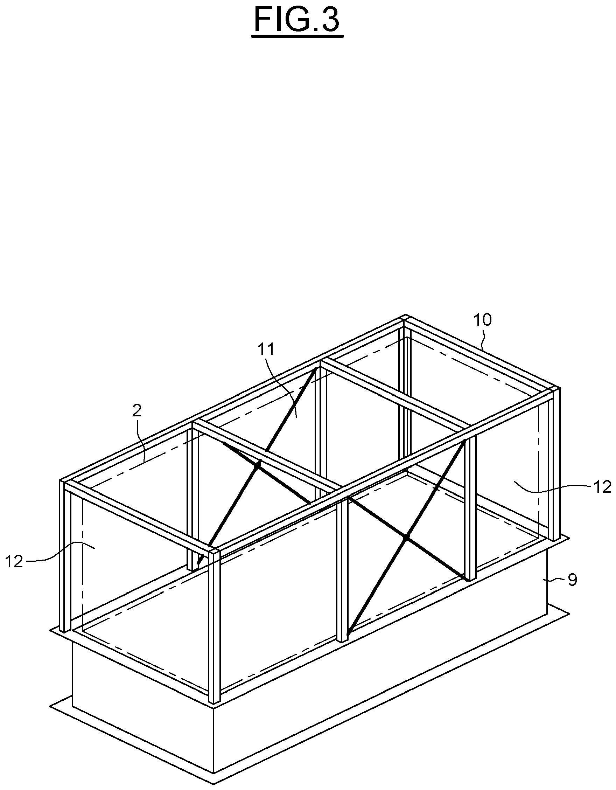

La figure 3 représente la première étape de montage de l'enceinte 3 autour de l'équipement thermique 2. Une structure métallique 10 est montée sur le socle 9, en particulier en périphérie de la surface supérieure du socle 9. La structure métallique 10 comprend une face supérieure ouverte 11, et entoure par des faces latérales ouvertes 12, l'équipement thermique 2. La structure métallique 10 permet de supporter la paroi supérieure 4 et la chambre circulaire 5.

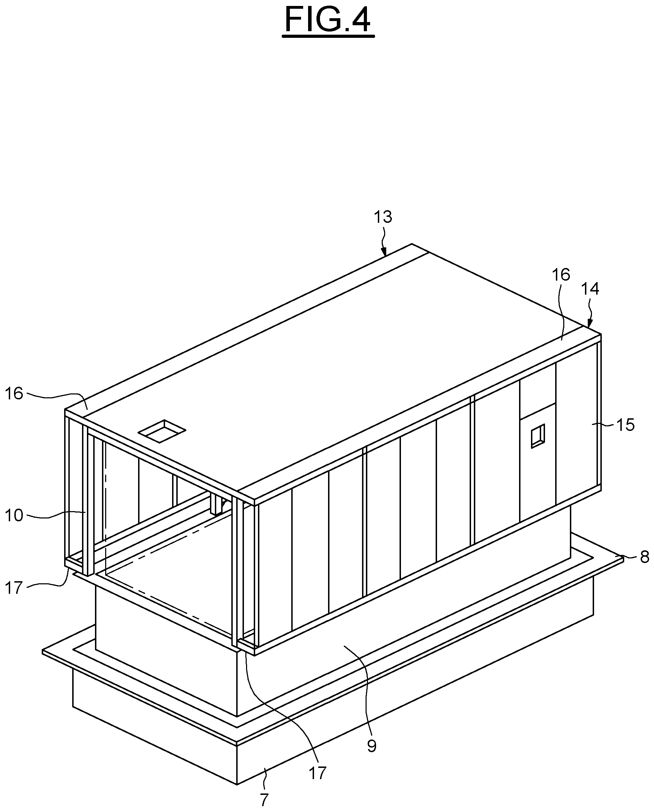

La figure 4 représente l'équipement thermique 2 et son socle 9 sur les fondations 7. La dalle 8 a été coulée autour des fondations 7 afin notamment de permettre le montage de la paroi circulaire 6. Par ailleurs, la paroi supérieure 4 est montée sur la face supérieure 11 de la structure métallique, de manière à protéger l'équipement thermique contre des chutes d'objet ou de pluie sur l'équipement thermique.

On considère dans la suite de la description que la structure métallique présente une forme rectangulaire, et que la chambre circulaire 5 comprend quatre extensions, ou parties, correspondant aux quatre côtés d'un rectangle.

Deux extensions 13, 14 de la chambre circulaire 5 sont montées sur la structure métallique 10. Les extensions 13, 14 sont des extensions latérales fixées, par leur face interne, sur la structure métallique 10. Plus particulièrement, les extensions 13, 14 sont fixées à deux faces latérales opposées 12 de la structure métallique 10, et s'étendent latéralement au-delà du socle 9 de l'équipement thermique 2. Les extensions 13, 14 comprennent une face externe au moins partiellement fermée par des panneaux acoustiques 15, une face supérieure 16 et une face inférieure 17.

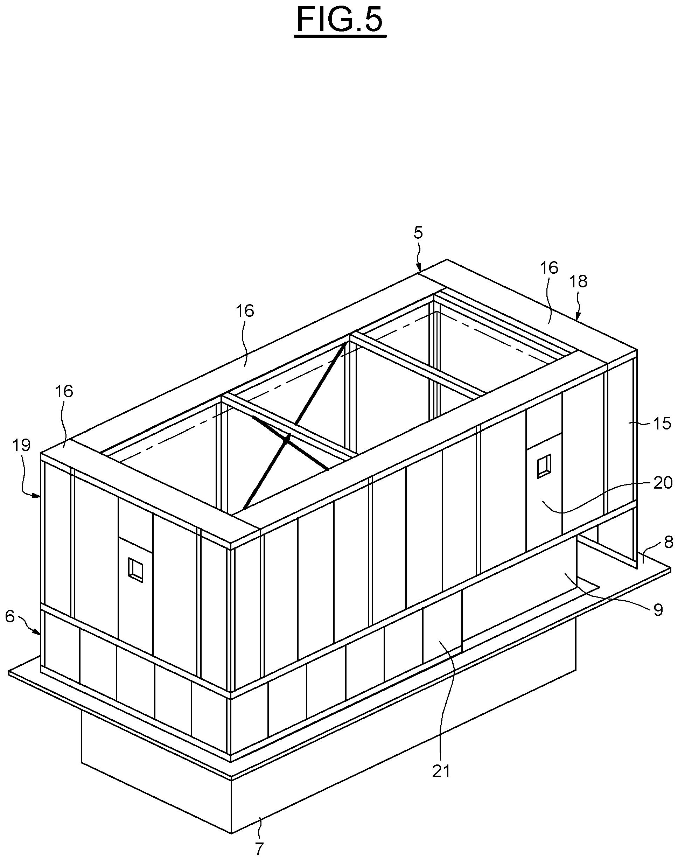

Sur la figure 5, deux extensions supplémentaires 18 et 19 de la chambre circulaire 5 ont été montées sur la structure métallique 10. Les extensions 18 et 19 sont des extensions latérales fixées par leur face interne, sur la structure métallique 10. Plus particulièrement, les extensions 18, 19 sont fixées aux deux faces latérales opposées 12 restantes de la structure métallique 10, et s'étendent latéralement au-delà du socle 9 de l'équipement thermique 2. Les extensions 18, 19 comprennent une face externe au moins partiellement fermée par des panneaux acoustiques 15, une face supérieure 16 et une face inférieure 17. Les quatre extensions 13, 14, 18 et 19 définissent ainsi la chambre circulaire 5. La chambre circulaire 5 présente donc un volume intérieur laissé libre pour accueillir l'équipement thermique 2, et délimité par une face interne par laquelle la chambre circulaire 5 est fixée aux faces latérales 12 de la structure métallique 10. Par ailleurs, la chambre circulaire 5 s'étend latéralement au-delà du socle 9, et présente une face inférieure 17 et une face supérieure 16. La chambre circulaire 5 présente également une face externe comprenant des panneaux isolants 15 et une ou plusieurs portes 20.

L'enceinte 3 comprend également une paroi circulaire 6, montée entre la chambre circulaire 5 et la dalle 8 coulée autour des fondations 7 de l'équipement thermique. Ainsi, la paroi circulaire 6 entoure le socle 9 de l'équipement thermique, qui peut être à l'origine de nuisances sonores. La paroi circulaire 6 comprend également des panneaux acoustiques 21 qui peuvent être démontés pour accéder éventuellement au socle 9. Le volume d'air compris entre le socle 9 et la paroi circulaire 6 est notamment séparé du volume compris entre l'équipement thermique 2 et la chambre circulaire 5 par la face inférieure 17 de la chambre circulaire 5. On limite ainsi la quantité d'agent extincteur à prévoir pour le volume compris entre l'équipement thermique 2 et la chambre circulaire 5.

Grâce à l'épaisseur de la chambre circulaire 5 qui s'étend latéralement au-delà du socle 9, les personnes intervenant sur l'équipement thermique peuvent accéder et circuler facilement autour de l'équipement thermique 2 sans être gênées par l'enceinte 3. Au contraire, les personnes peuvent circuler dans la chambre circulaire 5 à hauteur de l'équipement thermique 2 puisque la face inférieure 17 de la chambre circulaire est sensiblement à la même hauteur que la surface supérieure du socle 9. De plus, la chambre circulaire 5 ne nécessite pas de fondations distinctes de celles de l'équipement thermique 2, et peut être montée aisément sur site.

En particulier, lors du transport et de l'installation de l'équipement thermique sur un site donné, l'équipement thermique 2 et son socle 9 peuvent être transportés et livrés avec la structure métallique 10 et la paroi supérieure 4 de l'enceinte. On limite ainsi le volume nécessaire au transport de l'enceinte, en exploitant celui occupé par l'équipement thermique, et on fournit directement la structure métallique et éventuellement la paroi supérieure de l'enceinte montée, ce qui réduit le temps de montage de l'enceinte sur site. Par ailleurs, la structure métallique 10 et la paroi supérieure 4 permettent également de protéger l'équipement thermique pendant le transport. On pourra éventuellement prévoir des panneaux ou des bâches à fixer sur la structure métallique 10 pour fermer les faces latérales 12 de la structure métallique 10.

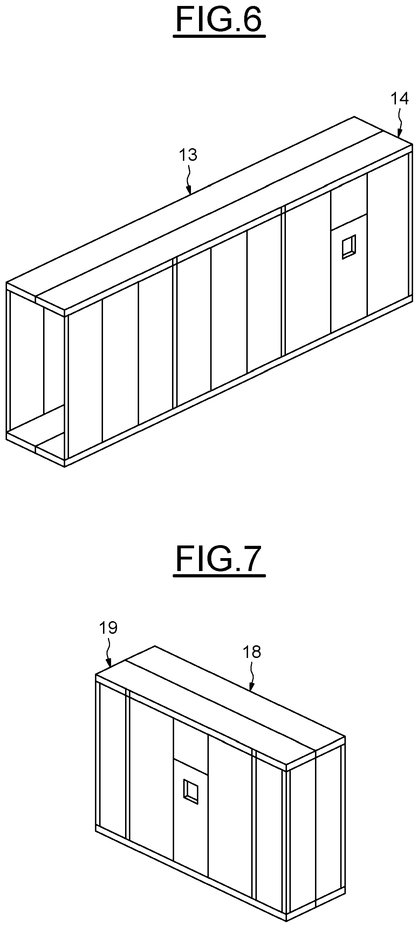

Par ailleurs, les extensions 13, 14, 18 et 19 de l'enceinte peuvent également être livrées en minimisant le volume nécessaire à leur transport. Ainsi, et comme représenté sur les figures 6 et 7, les extensions 13 et 14, qui présentent la même largeur, et les extensions 18 et 19 qui présentent aussi la même largeur, peuvent être assemblées, deux à deux, par leur face interne, de manière à occuper un volume réduit lors du transport, tout en gardant une résistance aux chocs pouvant intervenir lors du transport. Des équipements supplémentaires, par exemple les panneaux de la paroi circulaire ou le système de ventilation, pourront également être transportés dans des extensions en vis-à-vis. Enfin, une fois acheminées sur site, le montage de l'enceinte 3 ne nécessite plus que la fixation desdites extensions 13, 14, 18 et 19 sur les quatre côtés latéraux de la structure métallique 10. La structure métallique et des différentes extensions de la chambre circulaire 5 ayant été pré-assemblés en usine, avant l'acheminement sur site, on limite ainsi la durée de montage et d'installation de l'équipement thermique et de son enceinte sur site.

Il est alors possible de compléter l'enceinte en montant également une paroi circulaire 6 entre la dalle 8 coulée autour des fondations 7 et la chambre circulaire 5, si le socle 9 de l'équipement thermique peut être à l'origine de nuisances sonores. Par ailleurs, on peut également prévoir des ouvertures, par exemple dans la paroi supérieure 4 ou dans les panneaux 15, pour le système de ventilation de l'enceinte (évitant les zones stagnantes), et/ou pour acheminer ou évacuer les différents fluides entre l'équipement thermique et l'extérieur (combustibles, gaz d'échappement).

L'invention n'est pas limitée à une enceinte comprenant une chambre circulaire comme décrit précédemment, mais concerne également le cas d'une enceinte comprenant une chambre non-circulaire. Cela peut être le cas par exemple lorsque l'équipement thermique est assemblé à un second équipement thermique (par exemple un autre équipement thermique entraîné) par l'un de ses côtés. Dans ce cas, seule une des deux extensions 18 ou 19 de la chambre 5 est montée sur la face latérale de la structure métallique 10, plus précisément est montée sur la face latérale opposée au côté où est situé le second équipement thermique. Par ailleurs, lorsque l'équipement thermique est assemblé à deux autres équipements thermiques par deux faces latérales opposées, alors seules les extensions 13 et 14 de l'enceinte sont montées sur la structure métallique, comme illustré sur la figure 4.

On obtient ainsi une enceinte facilement transportable et aisée à monter, permettant d'effectuer facilement les opérations de maintenance sur l'équipement thermique tout en gardant un volume de protection limité autour de l'équipement thermique.

## Revendications

1. Enceinte (3), notamment acoustique, pour équipement thermique (2), ledit équipement thermique (2) étant monté sur un socle (9), comprenant :
- une structure métallique (10) comprenant des faces latérales (12) aptes à entourer au moins partiellement ledit équipement thermique (2), et
- une chambre (5) comprenant et définie par au moins une face interne, une face externe, une face supérieure et une face inférieure,
**caractérisée en ce que** la structure métallique (10) est apte à être montée sur le socle (9) dudit équipement thermique et **en ce que** ladite chambre (5) est montée, par sa face interne, sur au moins une des faces latérales de la structure métallique, et ladite chambre (5) est apte à s'étendre latéralement au-delà du socle (9) dudit équipement thermique, lesdites faces de la chambre définissant un volume dans lequel des personnes peuvent circuler afin d'intervenir sur ledit équipement thermique.

2. Enceinte (3) selon la revendication précédente comprenant également une paroi supérieure (4) et dans laquelle la structure métallique comprend une face supérieure (11) sur laquelle est montée la paroi supérieure (4).

3. Enceinte (3) selon l'une des revendications précédentes dans laquelle la face inférieure (17) et la face supérieure (16) de la chambre (5) sont au moins partiellement fermées.

4. Enceinte (3) selon l'une des revendications précédentes dans laquelle la face externe de la chambre (5), de préférence au moins partiellement fermée, comprend une ou plusieurs portes (20).

5. Enceinte (3) selon l'une des revendications précédentes comprenant également une paroi circulaire (6) montée sous la chambre (5) et apte à entourer latéralement le socle (9) dudit équipement thermique.

6. Enceinte (3) selon l'une des revendications précédentes dans laquelle la structure métallique comprend des faces latérales (12) aptes à entourer ledit équipement thermique (2), et la chambre est une chambre circulaire comprenant une face interne circulaire, de préférence au moins partiellement ouverte, et est montée, par sa face interne, sur les faces latérales de la structure métallique.

7. Enceinte (3) selon la revendication précédente dans laquelle la structure métallique (10) a une forme rectangulaire et dans laquelle la chambre circulaire (5) comprend quatre parties parallèles et de même largeur deux à deux.

8. Dispositif (1) comprenant un équipement thermique (2) monté sur un socle (9), et une enceinte (3) selon l'une quelconque des revendications précédentes.

9. Procédé de montage d'une enceinte (3) selon l'une des revendications 1 à 7, dans lequel on fixe la structure métallique (10) sur le socle (9) dudit équipement thermique, et on fixe la chambre (5) sur la structure métallique (10).

10. Procédé de montage d'une enceinte (3) selon la revendication précédente, l'enceinte comprenant une structure métallique (10) de forme rectangulaire et une chambre circulaire (5) avec quatre extensions parallèles et de même largeur deux à deux et éventuellement une paroi supérieure (4), dans lequel :
- on fixe la structure métallique (10) sur le socle dudit équipement thermique, avec ledit équipement thermique, éventuellement on monte la paroi supérieure (4) sur la face supérieure (11) de la structure métallique, et on assemble, deux à deux, par leur face interne, les extensions de même largeur de la chambre circulaire, pour l'acheminement sur le lieu de montage, puis
- on sépare les quatre extensions de la chambre circulaire et on les fixe à la structure métallique.

11. Procédé de montage selon l'une des revendications 9 ou 10 dans lequel on monte également une paroi circulaire (6) sous la chambre (5), autour du socle (9) dudit équipement thermique.

## Patentansprüche

1. Schutzmantel (3), insbesondere Schallschutzmantel, für eine thermische Anlage (2), wobei die thermische Anlage (2) auf einem Sockel (9) angebracht ist, umfassend:
- eine Metallkonstruktion (10), die Seitenflächen (12) umfasst, die geeignet sind, die thermische Anlage (2) wenigstens teilweise zu umgeben, und
- eine Kammer (5), die wenigstens eine Innenseite, eine Außenseite, eine Oberseite und eine Unterseite umfasst und durch diese definiert ist,
**dadurch gekennzeichnet, dass** die Metallkonstruktion (10) geeignet ist, auf dem Sockel (9) der thermischen Anlage angebracht zu werden, und dadurch, dass die Kammer (5) über ihre Innenseite an wenigstens einer der Seitenflächen der Metallkonstruktion angebracht ist und die Kammer (5) geeignet ist, sich seitlich über den Sockel (9) der thermischen Anlage hinaus zu erstrecken, wobei die Seiten der Kammer ein Volumen definieren, in welchem sich Personen umherbewegen können, um Eingriffe an der thermischen Anlage auszuführen.

2. Schutzmantel (3) nach dem vorhergehenden Anspruch, welcher außerdem eine obere Wand (4) umfasst und in welchem die Metallkonstruktion eine Oberseite (11) umfasst, auf welcher die obere Wand (4) angebracht ist.

3. Schutzmantel (3) nach einem der vorhergehenden Ansprüche, wobei die Unterseite (17) und die Oberseite (16) der Kammer (5) wenigstens teilweise geschlossen sind.

4. Schutzmantel (3) nach einem der vorhergehenden Ansprüche, wobei die Außenseite der Kammer (5), die vorzugsweise wenigstens teilweise geschlossen ist, eine oder mehrere Türen (20) umfasst.

5. Schutzmantel (3) nach einem der vorhergehenden Ansprüche, welcher außerdem eine umlaufende Wand (6) umfasst, die unter der Kammer (5) angebracht ist und geeignet ist, den Sockel (9) der thermischen Anlage seitlich zu umgeben.

6. Schutzmantel (3) nach einem der vorhergehenden Ansprüche, wobei die Metallkonstruktion Seitenflächen (12) umfasst, die geeignet sind, die thermische Anlage (2) zu umgeben, und die Kammer eine umlaufende Kammer ist, die eine umlaufende Innenseite umfasst, die vorzugsweise wenigstens teilweise offen ist, und über ihre Innenseite an den Seitenflächen der Metallkonstruktion angebracht ist.

7. Schutzmantel (3) nach dem vorhergehenden Anspruch, wobei die Metallkonstruktion (10) eine rechteckige Form aufweist und wobei die umlaufende Kammer (5) vier Teile umfasst, die paarweise parallel und von gleicher Breite sind.

8. Vorrichtung (1), welche eine auf einem Sockel (9) angebrachte thermische Anlage (2) und einen Schutzmantel (3) nach einem der vorhergehenden Ansprüche umfasst.

9. Verfahren zur Montage eines Schutzmantels (3) nach einem der Ansprüche 1 bis 7, wobei die Metallkonstruktion (10) auf dem Sockel (9) der thermischen Anlage befestigt wird und die Kammer (5) an der Metallkonstruktion (10) befestigt wird.

10. Verfahren zur Montage eines Schutzmantels (3) nach dem vorhergehenden Anspruch, wobei der Schutzmantel eine Metallkonstruktion (10) von rechteckiger Form und eine umlaufende Kammer (5) mit vier Teilabschnitten, die paarweise parallel und von gleicher Breite sind, und eventuell eine obere Wand (4) umfasst, wobei:
- die Metallkonstruktion (10) auf dem Sockel der thermischen Anlage befestigt wird, zusammen mit der thermischen Anlage, eventuell die obere Wand (4) auf der Oberseite (11) der Metallkonstruktion befestigt wird und die Teilabschnitte gleicher Breite der umlaufenden Kammer für den Transport zum Montageort paarweise über ihre Innenseiten zusammengefügt werden, danach
- die vier Teilabschnitte der umlaufenden Kammer getrennt werden und an der Metallkonstruktion befestigt werden.

11. Verfahren zur Montage nach einem der Ansprüche 9 oder 10, wobei außerdem eine umlaufende Wand (6) unter der Kammer (5) um den Sockel (9) der thermischen Anlage herum angebracht wird.

## Claims

1. Enclosure (3), particularly an acoustic enclosure, for a thermal equipment (2), said thermal equipment (2) being mounted on a base (9), comprising:
- a metal structure (10) comprising lateral faces (12) able at least partially to surround said thermal equipment (2), and
- a chamber (5) comprising and being defined by at least an internal face, an external face, an upper face and a lower face,
**characterized in that** the metal structure (10) can be mounted on the base (9) of said thermal equipment and **in that** said chamber (5) is mounted, via its internal face, on at least one of the lateral faces of the metal structure, and said chamber (5) is able to extend laterally beyond the base (9) of said thermal equipment, said faces of the chamber defining a volume in which people can move around with a view to performing an intervention on said thermal equipment.

2. Enclosure (3) according to the preceding claim, also comprising an upper wall (4) and in which the metal structure comprises an upper face (11) on which the upper wall (4) is mounted.

3. Enclosure (3) according to either of the preceding claims, in which the lower face (17) and the upper face (16) of the chamber (5) are at least partially closed.

4. Enclosure (3) according to one of the preceding claims, in which the external face of the chamber (5), preferably at least partially closed, has one or more doors (20).

5. Enclosure (3) according to one of the preceding claims, also comprising a circular wall (6) mounted under the chamber (5) and able laterally to surround the base (9) of said thermal equipment.

6. Enclosure (3) according to one of the preceding claims, in which the metal structure comprises lateral faces (12) able to surround said thermal equipment (2), and the chamber is a circular chamber comprising a circular internal face, preferably at least partially open, and is mounted, via its internal face, on the lateral faces of the metal structure.

7. Enclosure (3) according to the preceding claim, in which the metal structure (10) has a rectangular shape and in which the circular chamber (5) comprises four parts which in pairs are the same width and parallel.

8. Device (1) comprising a thermal equipment (2) mounted on a base (9), and an enclosure (3) according to any one of the preceding claims.

9. Method of constructing an enclosure (3) according to one of claims 1 to 7, in which method the metal structure (10) is fixed on the base (9) of the said thermal equipment, and the chamber (5) is fixed on the metal structure (10).

10. Method of constructing an enclosure (3) according to the preceding claim, the enclosure comprising a metal structure (10) of rectangular shape and a circular chamber (5) with four extensions that in pairs are of the same width and parallel and possibly an upper wall (4), in which method:
- the metal structure (10) is fixed on the base of the said thermal equipment, with said thermal equipment, possibly the upper wall (4) is mounted on the upper face (11) of the metal structure, and the like-width extensions of the circular chamber are assembled in pairs via their internal face so that they can be transported to the construction site, then
- the four extensions of the circular chamber are disconnected and fixed to the metal structure.

11. Construction method according to either of Claims 9 and 10, in which a circular wall (6) is also fitted under the chamber (5) around the base (9) of the said thermal equipment.
